# EUROPÄISCHE PATENTSCHRIFT

(11) **EP 2 681 033 B1**
(45) Veröffentlichungstag und Bekanntmachung des Hinweises auf die Patenterteilung: **06.09.2017**
(21) Anmeldenummer: 12708274.1
(22) Anmeldetag: 24.02.2012
(51) Int. Cl.: B29C 65/10, B29C 65/78

(54) **VERFAHREN UND VORRICHTUNG ZUM HERSTELLEN VON SÄCKEN, DEREN WANDUNGEN GERECKTES POLYOLEFINMATERIAL ENTHALTEN**
PROCESS AND DEVICE FOR PRODUCING BAGS, THE WALLS OF WHICH CONTAIN STRETCHED POLYOLEFIN MATERIAL
PROCÉDÉ ET DISPOSITIF POUR FABRIQUER DES SACS DONT LES PAROIS CONTIENNENT UNE MATIÈRE POLYOLÉFINIQUE ÉTIRÉE

(30) Priorität: 04.03.2011 DE 102011005109
(43) Veröffentlichungstag der Anmeldung: 08.01.2014
(73) Patentinhaber: Windmöller & Hölscher KG, 49525 Lengerich (DE)
(72) Erfinder: KÖHN, Uwe, 49078 Osnabrück (DE); HÄGER, Christian, 48480 Schapen (DE); WEHMEYER, Jörg, 49545 Tecklenburg (DE); HAWIGHORST, Thomas, 49205 Hasbergen (DE)
(86) Internationale Anmeldenummer: PCT/EP2012/053121
(87) Internationale Veröffentlichungsnummer: WO 2012/119863

(56) Entgegenhaltungen:
- EP-A1- 1 719 705
- EP-A2- 0 953 429
- EP-B1- 2 125 353
- DE-A1- 10 104 002
- DE-A1- 19 502 255
- GB-A- 655 893
- US-A- 4 210 480
- US-A- 4 625 495
- US-A- 6 134 387
- US-A1- 2002 084 028
- DATABASE WPI Week 198948 Thomson Scientific, London, GB; AN 1989-355262 XP002676411, -& SU 1 482 815 A1 (MOGIL MECH ENG INST) 30. Mai 1989 (1989-05-30)

## Beschreibung

Die Erfindung betrifft ein Verfahren und eine Vorrichtung zum Herstellen von Säcken, deren Wandungen gerecktes Polyolefinmaterial enthalten.

Es sind Vorrichtungen und Verfahren zur Herstellung von Säcken aus Kunststoff bekannt. Hierbei dienen Schlauchstücke aus Kunststoff oft als Ausgangswerkstücke, welche beispielsweise aus einem beschichteten Kunststoffgewebe bestehen können. Dieses Kunststoffgewebe wird oft aus gereckten Kunststoffbändchen hergestellt, die auf einem Webstuhl zu einem Rundgewebe verwebt werden. Eine andere Möglichkeit ist die Erstellung eines Flachgewebes, welches später durch Zusammenfügen der Längsseiten zu einem Schlauch geformt wird.

Die Beschichtung des Kunststoffgewebes kann auf zwei Arten erfolgen. So können die gereckten Bändchen vor dem Verweben beschichtet werden. Es bietet sich jedoch an, das fertige Gewebe als Ganzes mit einer einseitigen oder zweiseitigen Beschichtung zu versehen.

Der Aufbau des Gewebes aus gereckten Kunststoffbändchen und einer Beschichtung verleiht diesem Material besondere Eigenschaften. Die gereckten Kunststoffbändchen sind sehr reißfest und führen bei einem daraus hergestellten Werkstück zu einer hohen Festigkeit, die aufgrund des Verwebens in alle möglichen Lastrichtungen besteht. Um jedoch verschiedene Bestandteile solcher Werkstücke miteinander verbinden zu können, wird die Beschichtung bereitgestellt, welche stark an den Kunststoffbändchen anhaftet. Durch chemische oder thermische Prozesse können diese Beschichtungen, wenn zwei Bestandteile dieser Schlauchstücke oder Säcke verbunden werden sollen, miteinander verschmolzen werden. Der Versuch, die Kunststoffbändchen direkt mit solchen Prozessen zu verbinden, führt häufig zur Beeinträchtigung der Festigkeit. Dies gilt vor allem, wenn Wärme auf die Kunststoffbändchen einwirkt.

Bei der Herstellung von Säcken aus einem beschichteten Kunststoffgewebe sind Bestandteile, beispielsweise Einschläge bzw. Klappen des späteren Bodens miteinander zu verbinden. Der Herstellungsvorgang läuft folgendermaßen ab: Zunächst wird wenigstens ein Ende eines von einem Schlauch abgetrennten Schlauchstück aufgezogen und ausgestrichen, so dass ein offenes Bodenrechteck und seitliche, dreieckförmige Eckeinschläge entstehen. Anschließend kann ein Ventilzettel oder ein Ventilschlauchstück in den offenen Boden eingelegt werden. Dieses wird in der Regel im Rahmen eines durch Heißluft hervorgerufenen Siegelvorgangs mit dem Boden zusammengefügt. Nun wird der Boden verschlossen, indem die Längskanten des Bodenrechtecks, welche nicht an die Eckeinschläge grenzen, eingefaltet und miteinander sowie im Bedarfsfall mit den Eckeinschlägen und/oder mit dem das Ventil bildende Werkstück verbunden. Schließlich kann noch auf dem Boden, um ihm eine noch höhere Festigkeit zu verleihen, ein so genanntes Bodendeckblatt befestigt werden. Alle vorstehend erwähnten Fügeprozesse, werden nach dem Stand der Technik durch den Eintrag von Heißluft ermöglicht. Die Festlegung der Sackbestandteile gegeneinander erfolgt in der Regel in einem Walzenspalt.

Die Druckschriften US 6 134 387 A, US 4 625 495 A, EP 1 719 705 A1, US 4 210 480 A, GB 655 893 A und SU 1 482 815 A1 offenbaren Heißluftschweißverfahren und -vorrichtungen, bei denen die miteinander zu verbindenden Bestandteile jeweils von außen mit Heißluft beaufschlagt werden. Bei der Herstellung von Säcken, deren Wandungen Gewebe aus gerecktem Polyolefin enthalten, würde diese Vorgehensweise zur Einschränkung der Haltbarkeit dieser Säcke fübren

Eine Vorrichtung zur Herstellung von Kreuz- oder Klotzbodensäcken aus dem in Rede stehenden Kunststoffmaterial wird unter anderem von der DE 195 02 255 C2 gezeigt. Weitere Vorrichtungen zu diesem Zweck sind in den Druckschriften US 2002/084028 A1 und EP 0 953 429 A2 offenbart.

Bei den genannten Verfahren, wird ein kontinuierlicher Luftstrom, der in der Regel mit einem Radialverdichter erzeugt wird, an einer Heizvorrichtung vorbeigeführt, wobei sich die Luft erwärmt. Der nun erhitzte Luftstrom wird durch ein Wegeventil - das als temperaturbeständiges Drehventil ausgeführt ist - geführt, das den Luftstrom an eine Breitschlitzdüse weiterleitet, wenn sich ein Sack in der Fügestation befindet. Wenn sich kein Sack in der Fügestation befindet, befindet sich das Wegeventil in einem anderen Schaltzustand und leitet die Luft in einen Abluftschlauch, der die Luft ableitet.

Es gehört zu den ständigen Bestrebungen der Fachwelt, die Produktionsgeschwindigkeit von Sackmaschinen zu erhöhen. Um auch beim temperaturinduzierten Fügen von Sackbestandteilen eine höhere Geschwindigkeit erreichen zu können, schlägt die DE 101 04 002 B4 vor, Zettel - also vor allem Ventilzettel oder Bodendeckblätter - bereits vor dem eigentlichen Fügeprozess, bei dem die Zettel unter Druck und zusätzlichem Temperatureintrag auf die Sackböden aufgebracht werden, aufzuwärmen.

Die EP 2 125 353 B1 schlägt in ähnlichem Zusammenhang vor, die Sackböden, die oft mit den genannten Zetteln beaufschlagt werden, mit Heißluft vorzuwärmen.

Die genannten Maßnahmen tragen durchaus zu einer Beschleunigung der Sackproduktion bei. Der Bedarf nach noch schnelleren Produktionsvorrichtungen und -verfahren besteht jedoch noch immer.

Daher besteht die Aufgabe der vorliegenden Erfindung darin, einen weiteren Beitrag zur Beschleunigung der Produktion von Säcken, deren Wandungen gerecktes Polyolefinmaterial enthalten, zu leisten.

Diese Aufgabe wird durch die Ansprüche 1 und 6 gelöst.

Die vorliegende Erfindung macht sich zu Nutze, dass der pulsierende Luftstrom nur dann maximale Mengen thermischer Energie aufnimmt, wenn sie zum Fügen gebraucht wird. Daher kommt es nicht zu einer unnötigen Abkühlung von Heizelementen während der Intervalle, in denen keine Säcke in der Fügestation sind.

Ein pulsierender Luftstrom ist ein Luftstrom mit wechselnder Strömungsgeschwindigkeit. Oft stellen sich regelmäßige Wechsel derselben ein, die eine sinusähnliche Abhängigkeit von der Zeit mit sich bringen, wobei die Luftströmungen nicht völlig zum Erliegen kommen müssen.

Zu den weiteren Vorteilen der Erfindung gehört, dass in der Regel keine aufwändigen relativ temperaturunanfälügen Wegeventile (Drehventile) zur Durchführung des Verfahrens notwendig sind. Diese Drehventile sind teuer, oft undicht und sie haben eine große Wärmekapazität. Insbesondere, wenn diese Ventile nicht im Rahmen der Umsetzung der vorliegenden Erfindung verwendet werden und unter anderem der gesamte Luftstrom unterbrochen wird, wenn sich kein Sack in der Fügestation befindet, lassen sich mit der Erfindung auch große Energieeinsparungen erzielen.

Luftströmungen können durch Druckgradienten zustande kommen. Erfindungsgemäß wird ein pulsierender Luftstrom mit einem Druckreservoir und einem ventilartigen Schaltelement hergestellt. Ein Spezialfall eines pulsierenden Luftstromes ist ein Luftstrom, der zeitweise völlig unterbrochen wird, was bei der vorgenannten Art der Erzeugung des betreffenden Luftstromes heißen kann, dass das Ventil ganz verschlossen wird. Ein temperaturinduzierter Fügeprozess ist ein Verbindungsprozess, der unter Temperatureintrag stattfindet. Auch Klebeprozesse, die auf diese Art stattfinden, sind denkbar. In der Regel enthalten Sackwandungen, die gerecktes Polyolefinmaterial enthalten, auch eine weitere Kunststoff- oder Polyolefinkomponente, die eine niedrigere Schmelz- und/oder Erweichungstemperatur besitzt als das gereckte Material. Typisch sind in diesem Zusammenhang Gewebe aus gereckten Polypropylenbändchen, die mit niedriger schmelzendem Polyolefin laminiert oder sonst irgendwie beschichtet sind.

Der Temperatureintrag mit Heißluft erhitzt das niedriger schmelzende Material bis es sich siegeln oder schweißen lässt. Vorteilhaft ist, wenn das gereckte Material zu diesem Zeitpunkt noch nicht die Temperatur erreicht hat, bei der es seine im Reckprozess erworbenen Eigenschaften verliert oder zu verlieren beginnt.

Ein Druckreservoir im Sinne der vorliegenden Anmeldung liegt vor, wenn ein Raum einen höheren Druck aufweist als seine Umgebung. Ein solches Druckreservoir kann eine Pressluftflasche sein, es kann aber auch ein Raum sein, in den ein geeignetes Gebläse Luft hineinpresst und dabei verdichtet. Hierbei kann das Gebläse auch in geregelter Form betrieben werden, wobei der zu erreichende Sollwert ein bestimmter Druckwert sein kann. Das Gebläse beziehungsweise der Verdichter kann während mehrerer Fügeprozesse kontinuierlich arbeiten.

Zur kontinuierlichen Bereitstellung von Luft höheren Drucks gibt es eine Vielzahl vorteilhafter Möglichkeiten. Aufgrund des hohen Bedarfs an Luft bei dem Sackproduktionsprozess ist es vorteilhaft, wenn ein geeigneter Kompressor oder Verdichter in einer Arbeitsposition zu dem zumindest einen Druckreservoir steht. Die Arbeitsposition kann darin bestehen, dass ein Kompressor einem oder mehreren Druckreservoiren zugeordnet - also über Leitungen mit ihnen verbunden - ist. Kompressoren oder Verdichter können jedoch auch ein Druckluftsystem speisen, dass Druckluft für unterschiedliche Bestandteile der Sackfabrik bereitstellt.

Eine vorteilhafte Möglichkeit, die verdichtete Luft bereitzustellen, sind im vorliegenden Zusammenhang Turboverdichter.

Der Begriff Luft wird im Zusammenhang mit der vorliegenden Druckschrift als Synonym für gasförmige Medien verwendet. Natürlich können statt Luft auch geeignete Gase wie Stickstoff verwendet werden. Dies gilt insbesondere, wenn bei der Erhitzung des Sackmaterials Oxidationen zu befürchten sind.

Die Luft kann vorteilhafterweise durch eine Mehrzahl von Kanälen geführt werden. Diese Kanäle können dem Ventil nachgelagert sein und sie können der Erhitzung der Luft dienen. In diesem Zusammenhang ist es vorteilhaft, wenn die Kanäle aus einem Metall, vorzugsweise aus Aluminium, Kupfer oder Messing hergestellt sind. Eine vorteilhafte Möglichkeit besteht in der Bereitstellung einer "Kanalplatte oder Düsenplatte", die mit Nuten oder Bohrungen, die die Kanäle bilden, versehen ist. Diese Platte kann durch zumindest eine Heizvorrichtung, wie ein Thermoelement, geheizt werden. Als Thermoelement wird dürfte oft eine Heizpatrone oder auch ein Pelletierelement Verwendung finden.

Es ist vorteilhaft, wenn die Kanäle den Luftstrom auffächern, also beispielsweise aus einem schmalen Luftstrom einen breiten Luftstrom machen. Auch ein Vorwärmen der zu fügenden Sackbestandteile ist vorteilhaft. Auch hierbei kann ein pulsierender Luftstrom im Sinne der in dieser Druckschrift vorgestellten Vorrichtungen und Verfahren vorteilhaft zum Einsatz kommen. Es ist von großem Vorteil, wenn zumindest ein Druckreservoir in der oben besprochenen Weise eingesetzt wird. Dieses zumindest eine Druckreservoir kann beheizt werden. Hierbei ist die allgemeine Gasgleichung zu beachten. So ist es vorteilhaft, die Heizung nach der Temperatur zu regeln, den Druck in dem Reservoir zu regeln und/oder zumindest ein Überdruckventil vorzusehen.

Weitere Ausführungsbeispiele der Erfindung gehen aus der nun folgenden gegenständlichen Beschreibung und der Zeichnung hervor.

Die einzelnen Figuren zeigen:
- Fig. 1: Seitenansicht einer Arbeitsstation in einer Vorrichtung zur Herstellung von Säcken, deren Bestandteile gerecktes Polyolefin-Material enthalten.
- Fig. 2: Eine (seitliche) Funktionsskizze von Mitteln zum Erzeugen eines Heißluftstroms gemäß dem Stand dem Technik
- Fig. 3: Eine (seitliche) Funktionsskizze von erfindungsgemäßen Mitteln zum Erzeugen eines Heißluftstroms
- Fig. 4: Eine (seitliche) Funktionsskizze von weiteren erfindungsgemäßen Mitteln zum Erzeugen eines Heißluftstroms
- Fig. 5: Eine (seitliche) Funktionsskizze von weiteren erfindungsgemäßen Mitteln zum Erzeugen eines Heißluftstroms
- Fig. 6: Eine Funktionsskizze (als Draufsicht) von weiteren erfindungsgemäßen Mitteln zum Erzeugen eines Heißluftstroms
- Fig. 7: Eine Funktionsskizze (als Draufsicht) von weiteren erfindungsgemäßen Mitteln zum Erzeugen eines Heißluftstroms

Wie bereits in der einleitenden Beschreibung ausführlich dargelegt wurde, sind bei der Herstellung von Säcken aus beschichteten Kunststoffgewebeschläuchen mehrere Verfahrensschritte notwendig. Insbesondere zum Verbinden verschiedener Bestandteile der späteren Säcke sind entsprechende Arbeitsstationen vorzusehen. Im Einzelnen sind dies: eine Arbeitsstation zum Aufbringen von Ventilzetteln, Arbeitsstationen zum dauerhaften Verschließen der Böden und Arbeitsstationen zum Aufbringen von Bodendeckblättern, die die Böden der Säcke verstärken. Auf den Einsatz von Arbeitsstationen zum Aufbringen der Bodendeckblätter kann gegebenenfalls verzichtet werden. Weitere Arbeitsstationen sind denkbar.

In der Regel sind die Arbeitsstationen doppelt ausgeführt, so dass die entsprechenden Arbeiten gleichzeitig an beiden Enden der Schlauchstücke, welche in der Regel quer zu ihrer Schlauchlängsachse gefördert werden, ausgeführt werden können. Die Anzahl der Arbeitsstationen zum Einbringen der Ventilblätter oder -schläuche kann von dieser Regel, je nach gewünschter Anzahl der Ventile, abweichen.

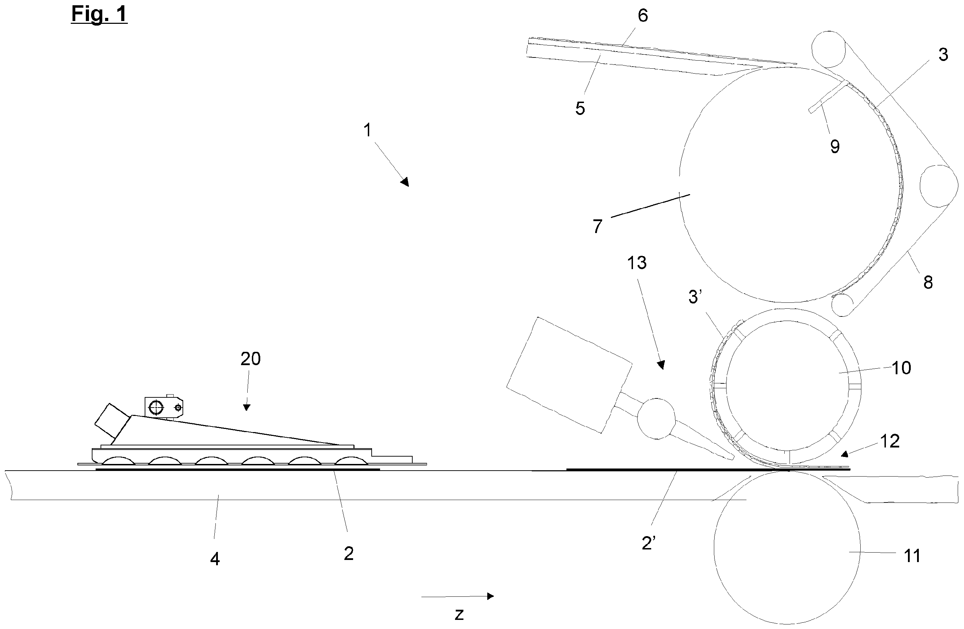

Die Fig. 1 zeigt die Seitenansicht auf eine solche Arbeitsstation 1 in einer erfindungsgemäßen Vorrichtung, bei der es sich um eine Arbeitsstation zum Aufbringen von Bodendeckblättern 3, 3' auf Säcke 2, 2' handelt. Die quer geförderten Säcke 2, 2' liegen dabei auf einem Tisch 4 auf und werden durch ein geeignetes, nicht gezeigtes Transportmittel in Transportrichtung z transportiert. Die bereits zugelegten Böden sind ebenfalls in die Ebene des Tisches gelegt. Die Erfindung ist hierauf jedoch nicht beschränkt, vielmehr können die Böden auch in einer Ebene liegen, die orthogonal zu der Ebene verläuft, die durch die Tischebene aufgespannt wird.

Über einen Zulauf 5 wird der Arbeitstation 1 ein Bahnmaterial 6 zugeführt, von dem die Bodendeckblätter 3, 3' abgetrennt werden. Dazu wird das voraus laufende Ende des Bahnmaterials 6 vom Schneidzylinder 7 und dem Transportband 8 erfasst und vorgezogen und von der im Schneidzylinder 7 integrierten, aber nicht näher gezeigten Schneideinrichtung 9 quer geschnitten. Das so entstandene Bodendeckblatt 3, 3' wird vom Saugzylinder 10 übernommen und auf den Boden des Sackes 2, 2' gelegt. Der Saugzylinder 10 bildet mit dem Gegendruckzylinder 11 einen Walzenspalt 12. Auf diese Weise wird das Bodendeckblatt 3' auf den Sack 2' mit hoher Kraft aufgepresst. In der Figur 1 ist bereits ein Teil des Sackes 2' mit aufliegendem Bodendeckblatt 3' durch den Walzenspalt geführt worden. Einlaufseitig des Walzenspaltes 12 sind Mittel zum Erzeugen eines Heißluftstromes 13 angeordnet, deren Heißluftstrom 18 in die Einlaufseite des Walzenspaltes 12 geleitet wird. Die Heißluft verursacht ein Anschmelzen der Beschichtung sowohl auf dem Boden des Sackes 2' als auch auf dem Bodendeckblatt 3'. Dabei werden, wie es der Figur 1 entnehmbar ist, die Beschichtungen der Oberflächen angeschmolzen bzw. plastifiziert, die unmittelbar danach zusammengebracht werden. Das Zusammenbringen der Oberflächen mit dem noch angeschmolzenen Beschichtungsmaterial erfolgt in dem Walzenspalt 12, so dass die Beschichtungen nunmehr eine Zwischenschicht, die als homogen angesehen werden kann, zwischen Bodendeckblatt und Boden bilden, welche die genannten Bestandteile nach dem Auskühlen dauerhaft verbindet.

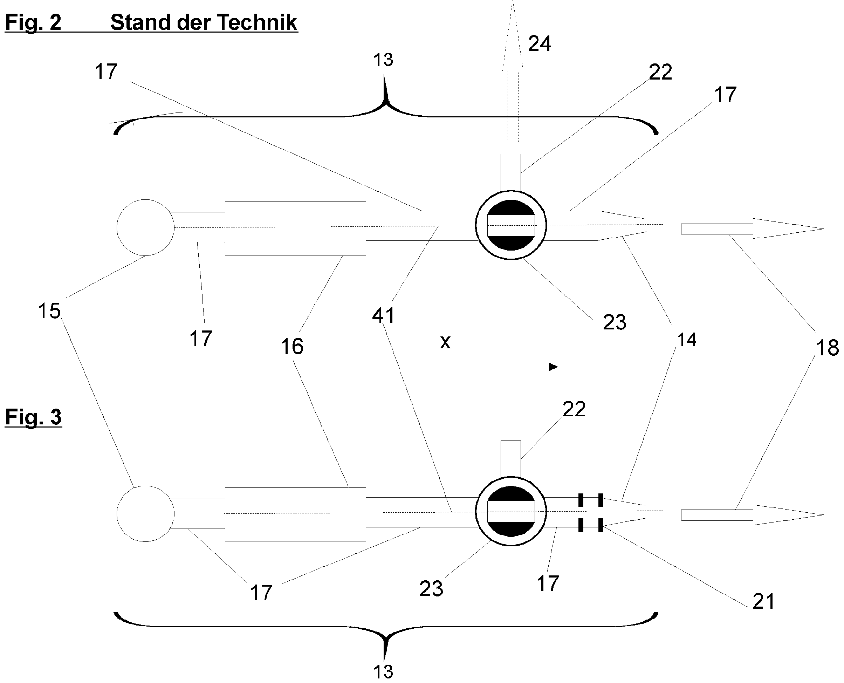

In Transportrichtung z ist dem Heißluftgebläse eine Vorwärmeinrichtung 20 vorgelagert, welche bereits das nächste Schlauchstück bzw. den nächsten Sack 2 vorwärmt, so dass dem Material des Sacks 2 durch die Mittel zum Erzeugen eines Heißluftstromes 13 nicht mehr so viel Wärme bis zur Plastifizierung der Oberflächenbeschichtung zugeführt werden muss, wie es der Fall wäre, wenn der Sack kurz vor dem Einlauf in den Walzenspalt 12 noch Umgebungstemperatur hätte. Auf diese Weise kann die durch die Düse 14 pro Zeiteinheit hindurchgeleitete Heißluftmenge geringer ausfallen und/oder die Temperatur des Heißluftstromes reduziert werden und/oder die Verweilzeit der zu erhitzenden Bestandteile im Heißluftstrom verkürzt werden. Der Aufbau und die Funktion der Mittel zum Erzeugen eines Heißluftstromes werden nachstehend aufgrund der Figuren 2 bis 7 erklärt.
Figur 2 zeigt Mittel zum Erzeugen eines Heißluftstromes 13 nach dem Stand der Technik, bei denen ein Gebläse 15 einen kontinuierlichen Luftstrom erzeugt, der durch ein Rohr 17 einer Heizvorrichtung 16 zugeführt wird. Hier nimmt der Luftstrom Temperatur auf. Anschließend wird der entstandene Heißluftstrom 18 dem Wegeventil 23 zugeführt. Dieses 23 leitet die Heißluft abwechselnd dem Abluftrohr 22 und der Düse 18 zu. Die Heißluft, die die Düse 14 durchströmt, trägt anschließend im Walzenspalt 12 zum temperaturinduzierten Fügen der Sackbestandteile (2, 2', 3, 3') bei. Wenn das Wegeventil 23 so eingestellt ist, dass es die Luft dem Abluftrohr 22 zuleitet, entsteht ein Abluftstrom, der durch den gestrichelten Pfeil 24 angedeutet ist.
Figur 3 zeigt Mittel 13 zum Erzeugen eines Heißluftstroms 18, die Bestandteil einer einfachen Ausführungsform der Erfindung sein können. Diese Mittel 13 zum Erzeugen eines Heißluftstroms sind fast so aufgebaut wie die eben beschriebenen Mittel 13 zum Erzeugen eines Heißluftstroms 18 in Figur 2. Es unterschieden sich lediglich die Heizpatronen 21, die im Bereich des dem Ventil 23 nachgelagerten Rohres 17 und der ebenfalls dem Ventil 23 nachgelagerten Düse 14 angebracht sind. Sie stehen in einer thermischen Wirkverbindung zu dem Heißluftstrom 18, der nach dem Ventil 23 eben ein pulsierender Heißluftstrom ist.
In den Figuren 2 und 3 ist der Strömungspfad 42 als gestrichelte Linie eingezeichnet. Die gerichtete Luftströmung folgt in aller Regel einem solchen Strömungspfad 42 auf ihrem Weg von dem Ort ihrer Erzeugung bis zu der Stelle an der Sackbestandteile 2, 2', 3, 3' gefügt werden. Heizvorrichtungen 16, 21 zur Erhitzung des Luftstromes 18 sind derart zu diesem Strömungspfad angeordnet, dass sie den Luftstrom 18 erhitzen. Bei Heizpatronen 21 kann das heißen, dass diese direkt in den Luftstrom 18 hineinragen. Es kann aber auch heißen, dass Heizpatronen 21 oder andere Heizvorrichtungen 16 Vorrichtungselemente, welche ihrerseits in direktem Kontakt mit dem Luftstrom stehen, heizen.

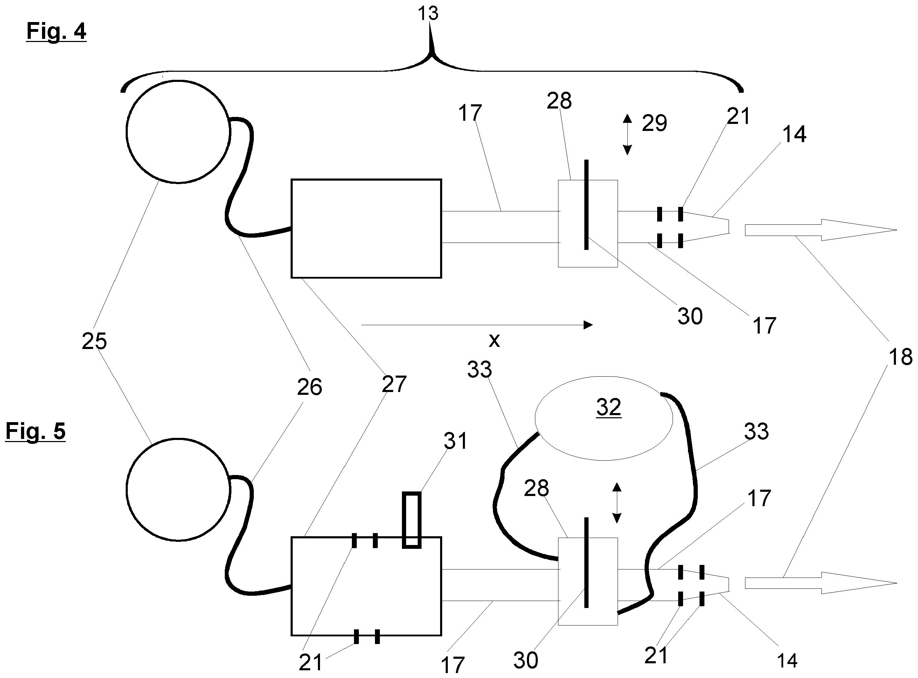

In Figur 4 ist ein Verdichter vorgesehen, der ein gasförmiges Medium, vorzugsweise Luft, durch den Druckschlauch 26 in das Druckreservoir 27 presst. Durch das Rohr 17 gelangt die Luft zu dem Ventil 28, das nach einem anderen Funktionsprinzip als das Dreh- oder Wegeventil 23 funktionieren kann, was durch den Schieber 30 und den Doppelpfeil 29 angedeutet ist. In diesem Zusammenhang können durchaus elektronische Ventile, die sehr schnell schalten können, zum Einsatz kommen. Dem Ventil sind ein weiteres Rohr 17, die Düse 14 und die Heizpatronen 21 in der Strömungsrichtung x der Heißluft nachgelagert. Die Heizpatronen 21 fungieren somit als Heizvorrichtung für den aufgrund des Einsatzes des Ventils 28 pulsierenden Heißluftstrom 18.
Die in Figur 5 gezeigten Mittel 13 zum Erzeugen eines Heißluftstromes 18 unterscheiden sich durch die Mittel 13 aus Figur 4 durch die folgenden Merkmale:
Bereits das Druckreservoir 27 ist durch die Heizpatronen 21 beheizbar. Alternativ und ergänzend kommt in Frage, das Druckreservoir 27 gut thermisch zu isolieren, da die Verdichtung der Luft durch den Verdichter 25 zu einer Steigerung der Temperatur führt. Temperatur, Druck des Druckreservoirs 21 sowie Heizleistung der Heizpatronen können alternativ oder ergänzend gemessen oder gar geregelt werden. Eine weitere vorteilhafte Maßnahme besteht in der Anbringung eines Überdruckventils 31, das bei einer Überschreitung eines Maximaldrucks Luft ablässt. Da nun das Druckreservoir 27 heiß sein kann, und ein temperaturempfindliches Ventil zum Einsatz kommen kann, ist es vorteilhaft, das Rohr 17 möglichst dünnwandig (aber druckbeständig genug) und aus isolierendem Material (z. B. Keramik) herzustellen. Das Ventil 28 ist kühlbar. Dies wird durch die Kühlvorrichtung 32 und die Kühlleitungen 33 angedeutet. Es kann sich um eine Wasserkühlung handeln, aber auch Kühlelemente, wie Pelletierelemente sind vorteilhaft. Auch das dem Ventil in Luftströmungsrichtung x nachgelagerte Rohr kann dünnwandig und isolierend sein. Im Bereich der Düse, die ja wieder von dem pulsierenden Luftstrom 18 durchströmt wird, der aktiviert wird soweit sich zu fügendes Material in der Fügestation 1 beziehungsweise im Bereich des Walzenspalts 12 befindet, befinden sich wieder Heizpatronen zum Heizen der Luft.

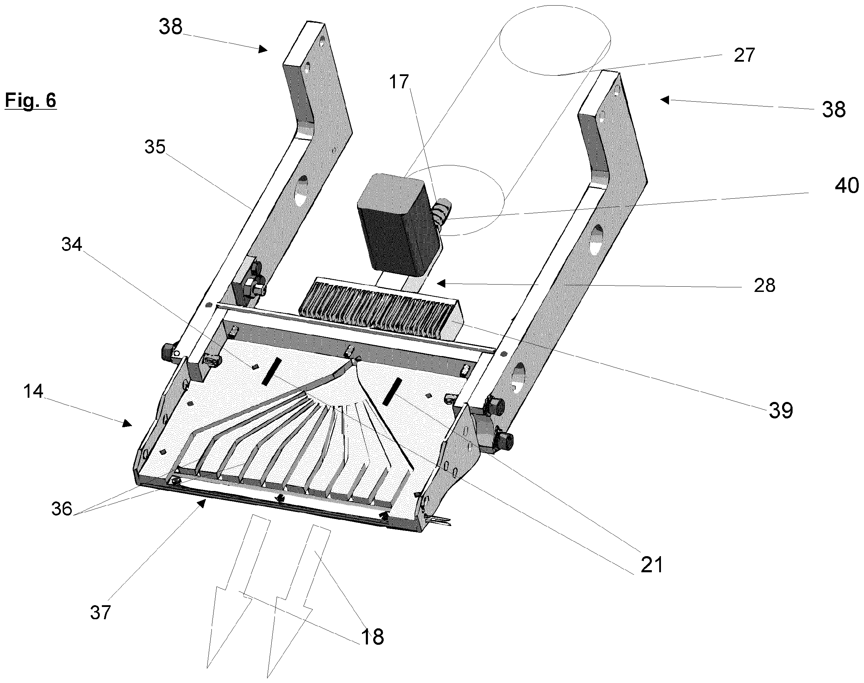

Mit den in den Figuren 4 und 5 gezeigten Vorrichtungen wird kein pulsierender Abluftstrom erzeugt. Dies gilt auch für die in Figur 6 gezeigte Vorrichtung, die den beiden vorgenannten Vorrichtungen stark ähnelt. Das Druckreservoir 27 bildet den Ausgangspunkt des Luftstromes 18, wobei auf die Darstellung z. B. einer Aufhängung des Druckreservoirs 27 verzichtet wurde. Das schwach Wärme leitende Rohr 17, das auch aus Edelstahl sein kann, verbindet das Druckreservoir 27 mit dem Ventil 28, dem ein Kühlkörper 39 zugeordnet ist. Nach dem Durchtritt durch das Ventil 28 gelangt der nunmehr pulsierende Luftstrom durch das Rohr 17 in den Bereich der Düsenplatte 34, die nicht von ihrer Abdeckplatte nach oben verschlossen ist, so dass sich ein freier Blick auf die Kanäle 36 ergibt, die als Nuten in die Düsenplatte eingebracht sind. Auf diese Weise wird die Düse 14 von Kanälen 36 durchzogen, die den Luftstrom 18 auffächern. Die Düsenplatte ist beheizbar, was durch die Heizpatronen 21 angedeutet ist. Die Heizpatronen sitzen vorteilhafterweise in Bohrungen der zumindest einen Düsenplatte, die aus einem wärmeleitfähigen Material wie Messing oder Aluminium angefertigt ist. Am Ende der Düsenplatte öffnen sich die Kanäle zu einer Breitschlitzdüse 37.

Die beheizten und erhitzen Vorrichtungsbestandteile im Düsenbereich sind vorteilhafterweise gegen den Halter 35, an dem die Mittel 13 zur Erzeugung eines Heißluftstromes 18 aufgehängt sind, mit dem Isoliermaterial 40 isoliert. So kann der Übergang der zumindest einen Düsenplatte 34 zu dem Halter wärmeisoliert werden. Auch die Abdeckplatten zur Außenluft können Isoliermaterial 40 enthalten.

Es ist denkbar, Teile des Halters aus temperaturbeständigem Kunststoff zu fertigen.

Des Weiteren kann der Bereich 38 der Befestigung des Halters 35 am Maschinengestell weiteres Isoliermaterial 40 enthalten und/oder es kann weiteres Isoliermaterial 40 zwischen den Halter und das Maschinengestell gebracht werden.

Der Kühlkörper 39 kann ein von Luft durchströmter Kühlkörper sein, der Kühlrippen besitzt. Seine Wirkverbindung zu dem zu kühlenden Ventil 28 kann durch mechanischen Kontakt zustande kommen, während die Wirkverbindung der Kühlvorrichtung 32 zu dem Ventil 28 in Figur 5 durch Kühlleitungen hergestellt wird. In beiden Fällen wird das Ventil, gewollt, gezielt und messbar gekühlt.

In Figur 6 ist das Ventil in der Strömungsrichtung x der Luft dem Ventil nachgelagert.

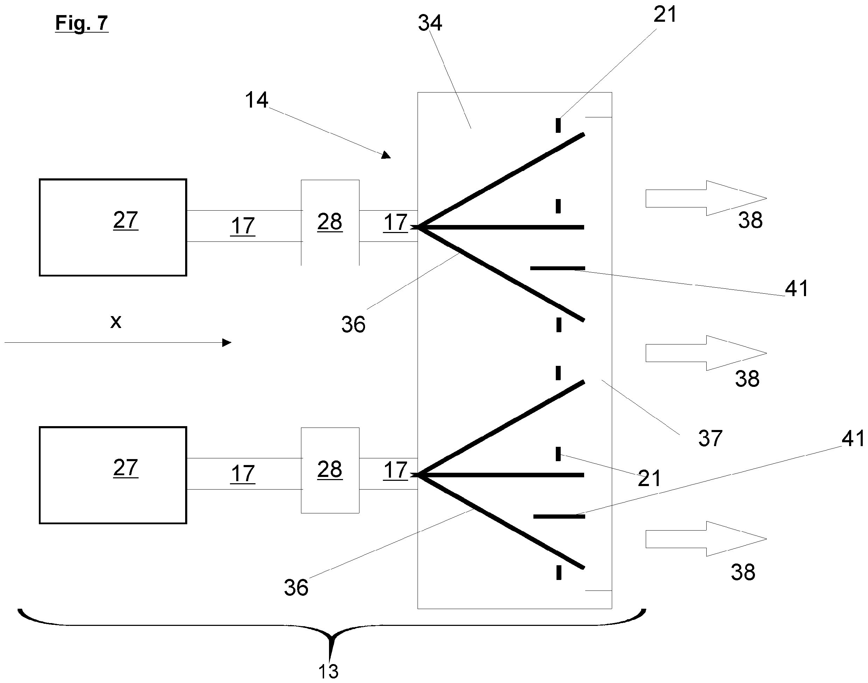

Figur 7 ist eine Funktionsskizze von weiteren Mitteln 13 zum Erzeugen eines Heißluftstromes, die mehrere Druckreservoire 27, Rohre 17 und Ventile 28 enthalten. Wieder fächert die Düsenplatte 34 mit auseinander laufenden Kanälen 36 die Luftströmung auf und verteilt sie auf die Breite der Breitschlitzdüse. Die Heizpatronen sind jeweils in der Nähe eines Kanals angeordnet. Auf diese Weise lassen sie sich in ihrer Wirkung einem oder mehreren Kanälen zuordnen. Auf diese Weise kann die Heizleistung über die Breite der Düse gesteuert oder geregelt werden und es kann beispielsweise ein Temperaturgradient (z. B. außen heißer als innen) aufgeprägt werden. Um die Zuordnung einzelner Heizvorrichtungen zu einzelnen oder mehreren Kanälen zu verbessern, kann die Düsenplatte durch Schlitz 41 unterbrochen oder geschwächt werden oder sie kann aus verschiedenen Bauteilen bestehen.

| **Bezugszeichenliste** | |
|---|---|
| 1 | Arbeitsstation |
| 2, 2' | Sack |
| 3, 3' | Bodendeckblatt |
| 4 | Tisch |
| 5 | Zulauf |
| 6 | Bahnmaterial |
| 7 | Schneidzylinder |
| 8 | Transportband |
| 9 | Schneideinrichtung |
| 10 | Saugzylinder |
| 11 | Gegendruckzylinder |
| 12 | Walzenspalt |
| 13 | Mittel zum Erzeugen eines Heißluftstromes |
| 14 | Düse |
| 15 | Gebläse |
| 16 | Heizvorrichtung |
| 17 | Rohr |
| 18 | Heißluftstrom |
| 19 | Drehventil |
| 20 | Vorwärmeinrichtung |
| 21 | Heizpatronen |
| 22 | Abluftrohr |
| 23 | Drehventil |
| 24 | Abluftstrom |
| 25 | Verdichter/Kompressor |
| 26 | Druckschlauch |
| 27 | Druckreservoir |
| 28 | Ventil |
| 29 | Doppelpfeil |
| 30 | Ventilschieber |
| 31 | Überdruckventil |
| 32 | Kühlvorrichtung |
| 33 | Kühlleitung |
| 34 | Düsenplatte |
| 35 | Halter |
| 36 | Kanäle |
| 37 | Breitschlitzdüse |
| 38 | Befestigungsbereich des Halters 35 |
| 39 | Kühlkörper |
| 40 | Isoliermaterial |
| 41 | Schlitz in der Düsenplatte |
| 42 | Strömungspfad |
| x | Strömungsrichtung der Heißluft |
| z | Transportrichtung der Säcke 2, 2' |

## Patentansprüche

1. Verfahren zum Herstellen von Säcken (2,2'), deren Wandungen Gewebe aus gerecktem Polyolefinmaterial und Beschichtungen enthalten,
- bei welchem zumindest ein temperaturinduzierter Fügeprozess herbeigeführt wird, indem zumindest ein Teil des zu fügenden Materials (2, 2', 3, 3') mit einem Heißluftstrom (18) erhitzt wird,
- der (18) erzeugt wird, indem zunächst Luft an einer oder mehreren Heizvorrichtungen (16, 21) vorbeigeführt wird und dann auf das zu fügende Material (2, 2', 3, 3') geleitet wird,
- wobei der Heißluftstrom in die Einlaufseite eines Walzenspalts (12) geleitet wird und wobei die Beschichtungen der Oberflächen des zu fügenden Materials angeschmolzen und in dem Walzenspalt zusammengebracht werden,
**dadurch gekennzeichnet, dass**
der Luftstrom (18) pulsierend an zumindest einer Heizvorrichtung (16, 21) vorbeigeführt wird, wobei zumindest ein Ventil (23, 28) betätigt wird, um den pulsierenden Luftstrom (18) zu erzeugen und mit dem Ventil (23, 28) die Öffnung eines Druckreservoirs (27) gesteuert wird, das einen höheren Druck als den Atmosphärendruck aufweist.

2. Verfahren nach dem vorstehenden Anspruch,
**dadurch gekennzeichnet, dass**
der Luftstrom (18) zwischen zwei Pulsen unterbrochen wird.

3. Verfahren nach einem der vorstehenden Ansprüche,
**dadurch gekennzeichnet, dass**
das Druckreservoir (27) während einer Mehrzahl von Fügeprozessen aufgeladen wird.

4. Verfahren nach einem der vorstehenden Ansprüche,
**dadurch gekennzeichnet, dass**
die Luft, die dem Boden eines Sackes (2, 2') zugeführt wird, durch mehrere Kanäle (36) geleitet wird.

5. Verfahren nach einem der vorstehenden Ansprüche,
**dadurch gekennzeichnet, dass**
zumindest ein Teil des zu fügenden Materials (2, 2', 3, 3') vorgewärmt wird, bevor es mit dem pulsierenden Luftstrom (18) und unter Krafteinwirkung gefügt wird.

6. Vorrichtung zur Herstellung von Säcken (2, 2') aus Sackmaterial, das Gewebe aus gerecktem Polyolefinmaterial und eine Beschichtung enthält,
- welche zumindest eine Station (1) zum temperaturinduzierten Fügen des Sackmaterials (2, 2', 3, 3') enthält,
- wobei diese Station (1) einen Walzenspalt (12) und Mittel (13) zum Erzeugen eines Luftstromes (18) enthält, welche zum Extrudieren eines gerichteten Luftstromes (18) geeignet sind,
- wobei diese Mittel (13) eine oder mehrere Heizvorrichtungen (16, 21) enthalten, die derart zu dem Luftstrom (18) angeordnet sind, dass der Luftstrom (18) erhitzt wird,
- wobei der Heißluftstrom durch die Mittel (13) zum Erzeugen eines Luftstroms in die Einlaufseite des Walzenspalts (13) leitbar ist und
- wobei mit dem Heißluftstrom die Beschichtungen der Oberflächen des Sackmaterials anschmelzbar sind und in dem Walzenspalt (12) zusammen bringbar sind,
**dadurch gekennzeichnet,**
**dass** zumindest ein Ventil (23, 28) in der Richtung des Luftstromes (x) zumindest einer Heizvorrichtung (16, 21) vorgelagert ist, wobei der Heißluftstrom aufgrund des Einsatzes des Ventils (23, 28) pulsierbar ist, und
**dass** dem Ventil (23, 28) in der Richtung (x) des Luftstromes (18) zumindest ein Druckreservoir (27) vorgelagert ist.

7. Vorrichtung nach dem vorstehenden Anspruch,
**dadurch gekennzeichnet, dass**
das zumindest eine Druckreservoir (27) beheizbar ist.

8. Vorrichtung nach einem der beiden vorstehenden Ansprüche,
**dadurch gekennzeichnet, dass**
das zumindest eine Druckreservoir (27) zur Speicherung von Pressluft geeignet ist.

9. Vorrichtung nach einem der vorstehenden Ansprüche 6 bis 8, **dadurch gekennzeichnet, dass**
dem zumindest einen Ventil (23, 28) in der Strömungsrichtung (x) zumindest zwei Luftkanäle (36) zum Führen des Luftstroms (18) entlang des Strömungspfades nachgelagert sind.

10. Vorrichtung nach dem vorstehenden Anspruch,
**dadurch gekennzeichnet, dass**
dass zumindest einer der zumindest zwei Luftkanäle (36) beheizbar ist.

11. Vorrichtung nach einem der beiden vorstehenden Ansprüche,
**dadurch gekennzeichnet, dass**
zumindest einer der beiden Kanäle (36) sich in der Strömungsrichtung (x) verbreitert.

12. Vorrichtung nach einem der vorstehenden Ansprüche 6 bis 11 **gekennzeichnet durch**
eine Kühlvorrichtung (32, 39), die in Wirkverbindung mit dem zumindest einen Ventil (23, 28) steht.

## Claims

1. Method and apparatus for the production of bags (2, 2'), the walls of which contain webs of stretched polyolefin material and coatings,
wherein at least one temperature-induced joining process is performed, and wherein at least a part of the materials (2, 2', 3, 3') to be joined is heated by means of a hot-air flow (18),
wherein the hot-air flow (18) is produced by first passing air past one or more heating devices (16, 21), and then passing it onto the material (2, 2', 3, 3') to be joined,
wherein the hot-air flow is fed to the inlet side of a roller gap (12), and wherein the coatings of the surfaces of the materials to be joined are melted and brought together in the roller gap,
**characterized in that**
the air flow (18) pulsatingly passes at least one heating device (16, 21), wherein at least one valve (23, 28) is actuated in order to generate the pulsating air flow (18), while the opening of a pressure reservoir (27), which has a higher pressure than atmospheric pressure, is controlled by the valve (23, 28).

2. Method according to the preceding claim,
**characterized in that**
the air flow (18) is interrupted between two pulses.

3. Method according to one of the preceding claims,
**characterized in that**
the pressure reservoir (27) is charged during a plurality of joining processes.

4. Method according to one of the preceding claims,
**characterized in that**
the air, which is fed to the bottom of a bag (2, 2') is passed through a plurality of channels (36).

5. Method according to one of the preceding claims,
**characterized in that**
at least a part of the material (2, 2', 3, 3') to be joined is preheated before it is joined by the pulsating air flow (18) and under the effect of force.

6. Apparatus for the production of bags (2, 2') from bag material, which contains a web of stretched polyolefin material and a coating,
- which contains at least one station (1) for temperature-induced joining of the bag material (2, 2', 3, 3'),
- wherein the station (1) comprises a roller gap (12) and means (13) for producing an air flow (18), which is suitable for extruding a directed air flow (18)
- wherein this means (13) contains one or more heating devices (16, 21) which are so arranged in the air flow (18) that the air flow (18) is heated,
- wherein the hot-air flow is fed through the means (13) for producing an air flow to the inlet side of the roller gap (12), and
- wherein the coatings of the surfaces of the bag material may be melted by means of the hot air flow and brought together in the roller gap (12)
**characterized in that**
at least one valve (23, 28) is arranged upstream of at least one heating device (16, 21) in the direction of the air flow (x), wherein the hot-air flow may be pulsed by the use of the valve (23, 28);
at least one pressure reservoir (27) is arranged upstream of the valve (23, 28) in the direction (x) of the air flow (18).

7. Apparatus according to the preceding claim,
**characterized in that**
the at least one pressure reservoir (27) is heatable.

8. Apparatus according to one of the two preceding claims,
**characterized in that**
the at least one pressure reservoir (27) is suitable for storing compressed air.

9. Apparatus according to one of the preceding claims 6 to 8,
**characterized in that**
at least two air channels (36) for guiding the air flow (18) are arranged downstream of the at least one valve (23, 28) in the direction of flow (x) along the flow path.

10. Apparatus according to the preceding claim,
**characterized in that**
at least one of the at least two air channels (36) is heatable.

11. Apparatus according to one of the two preceding claims,
**characterized in that**
at least one of the two channels (36) widens in the flow direction (x).

12. Apparatus according to one of the preceding claims 6 to 11,
**characterized in that**
a cooling device (32, 39) is in operative connection with the at least one valve (23,28).

## Revendications

1. Procédé de fabrication de sacs (2, 2') dont les parois contiennent un tissu de matériau polyoléfine étiré et des revêtements,
- dans lequel au moins un processus d'assemblage induit par la température est suscité par le fait qu'au moins une partie du matériau à assembler (2, 2', 3, 3') est chauffée avec un flux d'air très chaud (18),
- le flux d'air très chaud (18) est produit par le fait que d'abord de l'air est amené à passer devait un ou plusieurs dispositifs de chauffage (16, 21) et est ensuite guidé sur le matériau à assembler (2, 2', 3, 3'),
- le flux d'air très chaud étant guidé dans le côté entrée d'un interstice entre rouleaux (12), et les revêtements des surfaces du matériau à assembler étant mis en fusion et réunis dans l'interstice entre rouleaux,
**caractérisé en ce que**
le flux d'air (18) est amené de maçon pulsée à passer devant au moins un dispositif de chauffage (16, 21), au moins une vanne (23, 28) étant actionnée pour produire le flux d'air (18) pulsé, et l'ouverture d' un réservoir sous pression (27), qui présente une pression supérieure à la pression atmosphérique, étant commandée avec la vanne (23, 28).

2. Procédé selon la revendications précédente,
**caractérisé en ce que**
le flux d'air (18) est interrompu entre deux impulsions.

3. Procédé selon l'une des revendications précédentes,
**caractérisé en ce que**
le réservoir sous pression (27) est rechargé pendant une pluralité de processus d'assemblage.

4. Procédé selon l'une des revendications précédentes,
**caractérisé en ce que**
l'air qui est acheminé vers le fond d'un sac (2, 2') est guidé par plusieurs canaux (36).

5. Procédé selon l'une des revendications précédentes,
**caractérisé en ce**
**qu'**au moins une partie du matériau à assembler (2, 2', 3, 3') est préchauffée avant d'être assemblée avec le flux d'air (18) pulsé et sous l'action d'une force.

6. Dispositif de fabrication de sacs (2, 2') en matériau de sac qui contient un tissu de matériau polyoléfine étiré et un revêtement,
- qui continent au moins un poste (1) destinés l'assemblage induit par température du matériau (2, 2', 3, 3'),
- ce poste (1) contenant un interstice entre rouleaux (12) et des moyens (13) pour la production d'un flux d'air (18) qui sont appropriés pour l'extrusion d'un flux d'air (18) dirigé,
- ces moyens (13) contenant un ou plusieurs dispositifs de chauffage (16, 21) qui sont disposés de telle sorte par rapport au flux d'air (18) que le flux d'air (18) est chauffé,
- le flux d'air très chaud pouvant, par les moyens (13) destinés à la production d'un flux d'air, être guidé dans le côté entrée de l'interstice entre rouleaux (13),
- les revêtements des surfaces du matériau de sac pouvant être mis en fusion avec le flux d'air très chaud (18) et être réunis dans l'interstice entre rouleaux (12),
**caractérisé**
**en ce qu**'au moins une vanne (23, 28) est, dans le sens du flux d'air (x), montée en amont d' au moins un dispositif de chauffage (16, 21), le flux d'air très chaud pouvant être pulsé du fait de l'utilisation d'une vanne (23, 28), et
**en ce qu**'au moins un réservoir sous pression (27) est monté en amont de la vanne (23, 28) dans le sens (x) du flux d'air (18) .

7. Dispositif selon la revendication précédente,
**caractérisé en ce que**
le réservoir sous pression (27) au moins au nombre de un peut être chauffé.

8. Dispositif selon l'une des deux revendications précédentes,
**caractérisé en ce que**
le réservoir sous pression (27) au moins au nombre de un est approprié pour le stockage d'air comprimé.

9. Dispositif selon l'une des revendications précédentes 6 à 8,
**caractérisé en ce**
**qu**'au moins deux canaux d'air (36) destinés à conduire le flux d'air (18) le long du chemin d'écoulement sont montés en aval de la vanne (23, 28) au moins au nombre de un dans le sens de l'écoulement.

10. Dispositif selon la revendication précédente,
**caractérisé en ce**
**qu'**au moins un des canaux d'air (36) au moins au nombre de deux peut être chauffé.

11. Dispositif selon l'une des deux revendications précédentes,
**caractérisé en ce**
**qu**'au moins un des deux canaux (36) s'élargit dans le sens de l'écoulement (x).

12. Dispositif selon l'une des revendications précédentes 6 à 11,
**caractérisé par**
un dispositif de refroidissement (32, 39) qui est en interaction avec la vanne (23, 28) au moins au nombre de un.
